# EUROPEAN PATENT APPLICATION

(11) **EP 4 502 613 A1**
(43) Date of publication of application: **05.02.2025**
(21) Application number: 23780226.9
(22) Date of filing: 24.03.2023
(51) Int. Cl.: G01N 35/00

(54) **AUTOMATED ANALYZER**

(30) Priority: 31.03.2022 JP 2022058557
(71) Applicant: HITACHI HIGH-TECH CORPORATION, Tokyo 105-6409 (JP)
(72) Inventor: NODA, Kazuhiro, Tokyo 105-6409 (JP); TANOUE, Hidetsugu, Tokyo 105-6409 (JP); TAKAKURA, Tatsuki, Tokyo 105-6409 (JP); UMEKI, Hiroya, Tokyo 105-6409 (JP); YASUI, Akihiro, Tokyo 105-6409 (JP)
(74) Representative: MERH-IP Matias Erny Reichl Hoffmann Patentanwälte PartG mbB
(86) International application number: PCT/JP2023/011948
(87) International publication number: WO 2023/190216

(57) **Abstract**

[Problem]

An automatic analyzer is provided, which implements a mechanism layout according to each item while inheriting an operation feeling of a conventional device.

[Solution]

In a case where a sample dispensing mechanism 25 configured to dispense a first liquid from a first mechanism to a first analysis measurement unit 301 and a second analysis measurement unit 401, and a second dispenser configured to dispense a second liquid different from the first liquid from a second mechanism to the first analysis measurement unit 301 and the second analysis measurement unit 401 are provided, or in a case where the first analysis measurement unit 301 configured to perform analysis relating to a biochemical item group and the second analysis measurement unit 401 configured to perform analysis relating to an immune item group are provided, when a left-right direction of an assumed standing position of a user is defined as an X axis and a direction orthogonal to the X axis are defined as a Y axis, the first mechanism, the first analysis measurement unit 301, and the second mechanism are arranged in this order from a left side of the standing position along the X axis, and the first analysis measurement unit 301 and the second analysis measurement unit 401 are arranged in this order in a direction away from the standing position along the Y axis.

## Description

### Technical Field

The present invention relates to an automatic analyzer.

### Background Art

Patent Literature 1 discloses the automatic analyzer in which at least two and more different measurement units, each performing different types of analysis, are configured in a single complex unit.

### Citation List

### Patent Literature

Patent Literature 1: WO2018/163745

### Summary of Invention

### Technical Problem

In the case of the configuration of the device in the above-mentioned Patent Literature 1, it is a system configuration that combines a device configuration specialized for each item measurement and a sample input unit. Therefore, the above has such a problem that its use is limited to large/medium sized laboratories where the occupied area by the automatic analyzer can be used widely in the site area of the laboratory.

Therefore, it is desirable to reduce the occupied area in an integrated automatic analyzer that performs analysis for a plurality of items, with a small laboratory as a target.

Here, when a system is a family product of the conventional products, it is desirable that the operation feeling, analysis principle, and operation method of the conventional device be the same or similar, from the viewpoint of reducing the burden of an operator. However, since the operation methods and measurement principles vary for each item, the mechanism layout and system configuration are mostly specialized for each operation. Therefore, the mechanism layout has to be appropriately arranged or simplified according to each item while inheriting an operation feeling of the conventional devices.

The present invention is to provide an automatic analyzer which implements a mechanism layout according to each item while inheriting the operation feeling of the conventional devices.

### Solution to Problem

The present invention includes a plurality of means for solving the above problem; by way of example, it includes: a first analyzing unit configured to perform analysis relating to a first analysis item group; a second analyzing unit configured to perform analysis relating to a second analysis item group different from the first analysis group; a first mechanism commonly used for the first analysis item group and the second analysis item group; a second mechanism different from the first mechanism and commonly used for the first analysis item group and the second analysis item group; a first dispenser configured to dispense a first liquid from the first mechanism to the first analyzing unit and the second analyzing unit; and a second dispenser configured to dispense a second liquid different from the first liquid from the second mechanism to the first analyzing unit and the second analyzing unit. When a left-right direction of an assumed standing position of a user is defined as an X axis, and a direction orthogonal to the X axis is defined as a Y axis, the first mechanism, the first analyzing unit, the second mechanism are arranged in this order from a left side of the standing position along the X axis, and the first analyzing unit and the second analyzing unit are arranged in this order in a direction away from the standing position along the Y axis.

As another example, it includes a first analyzing unit configured to perform analysis relating to a biochemical item group, a second analyzing unit configured to perform analysis relating to an immune item group, a first mechanism commonly used for the biochemical item group and the immune item group, and a second mechanism different from the first mechanism and commonly used for the biochemical item group and the immune item group, in which when a left-right direction of an assumed standing position of a user is defined as an X axis, and a direction orthogonal to the X axis is defined as a Y axis, the first mechanism, the first analyzing unit, and the second mechanism are arranged in this order from a left side of the standing position along the X axis. The first analyzing unit and the second analyzing unit are arranged in this order in a direction away from the standing position along the Y axis.

### Advantageous Effects of Invention

According to the present invention, it is possible to implement a mechanism layout according to each item while inheriting an operation feeling of the conventional devices. Objects, configurations, and effects other than the above will be apparent from the description of the following embodiments.

### Brief Description of Drawings

Fig. 1 is a diagram illustrating an entire schematic configuration of an automatic analyzer.
Fig. 2 is a diagram illustrating a schematic configuration of a first analysis measurement unit and a second analysis measurement unit.
Fig. 3 is a diagram illustrating a schematic configuration of a first mechanism, the first analysis measurement unit, a second mechanism, and the second analysis measurement unit.
Fig. 4 is a diagram illustrating a schematic configuration when the automatic analyzer is viewed from diagonally above.
Fig. 5 is a diagram illustrating a schematic configuration of a lower structure of the automatic analyzer.

### Description of Embodiments

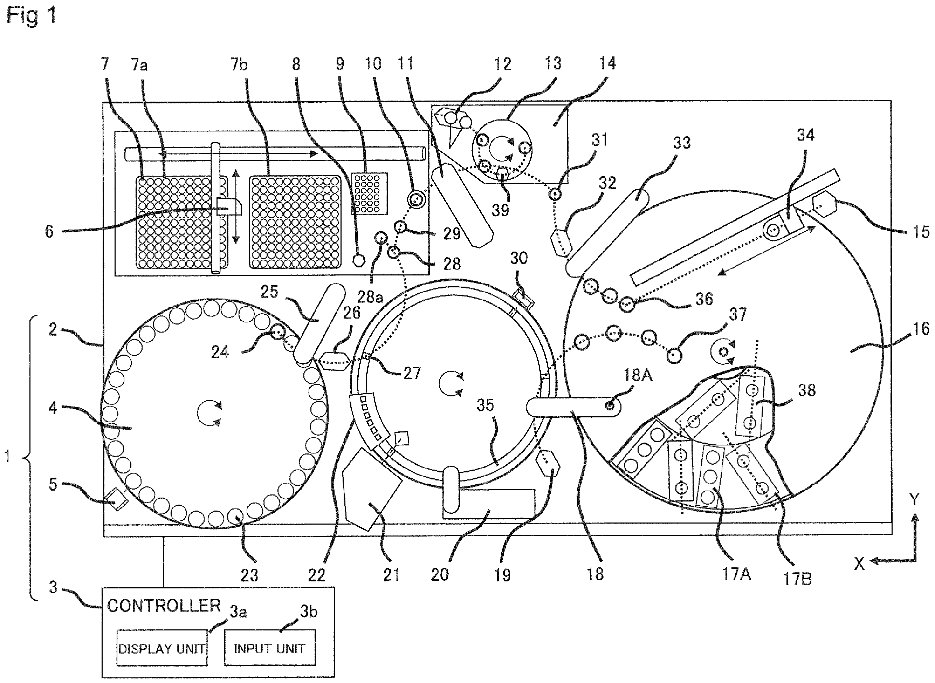

At first, the embodiment of the automatic analyzer in the present invention will be described using Figs. 1 to 5.

The embodiments described hereinafter are only one example, and can be modified without departing from the spirit. The features illustrated or described with one exemplary form may be combined with features of another form.

Further, in the drawings used in this specification, the same or corresponding components are marked with the same or similar symbols, and the repeated description of these components may be omitted.

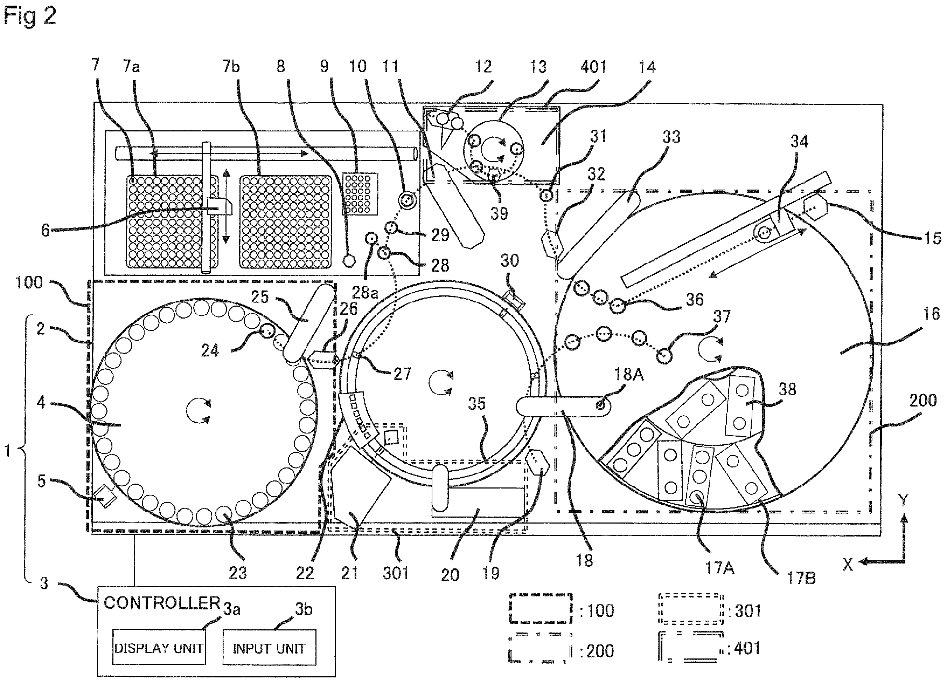

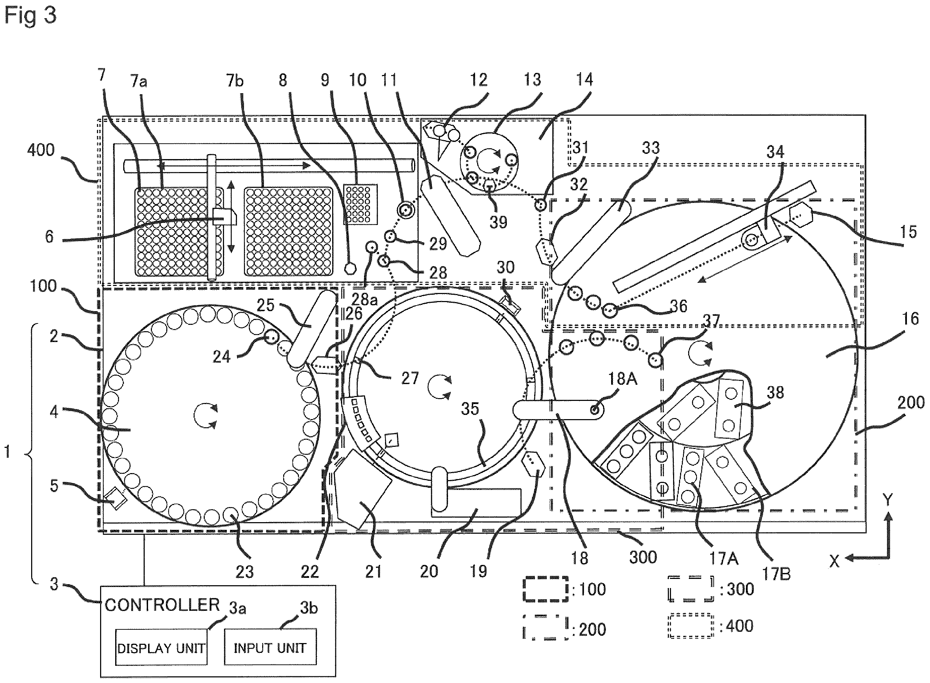

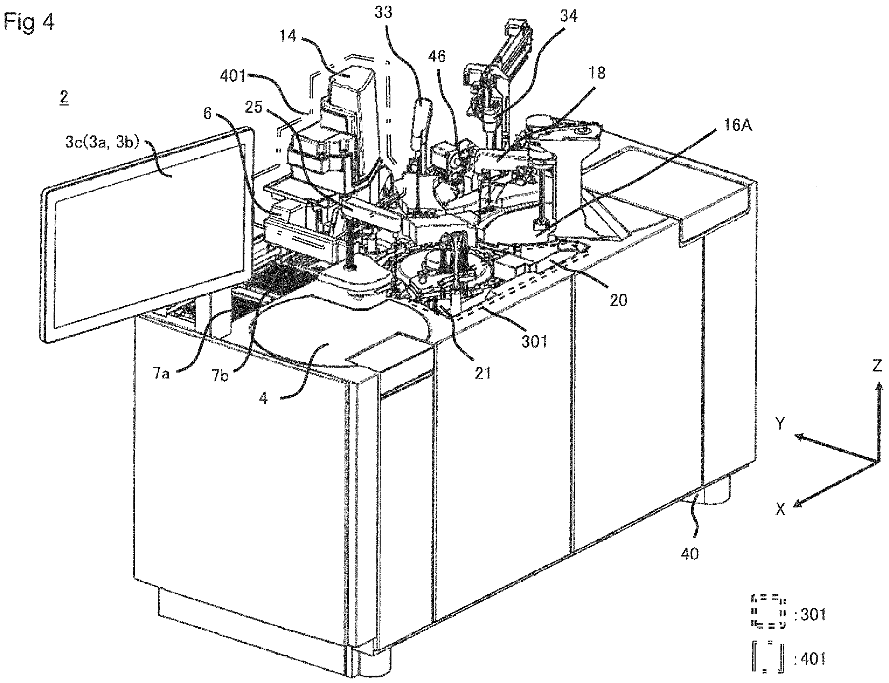

At first, the whole configuration of the automatic analyzer will be described using Figs. 1 to 4. Fig. 1 is a diagram illustrating a configuration example of the automatic analyzer. Fig. 2 is a diagram illustrating a schematic configuration of a first analysis measurement unit and a second analysis measurement unit. Fig. 3 is a diagram illustrating a schematic configuration of a first mechanism, the first analysis measurement unit, a second mechanism, and the second analysis measurement unit. Fig. 4 is a diagram illustrating a schematic configuration when the automatic analyzer is viewed from diagonally above.

In the automatic analyzer 1, the first mechanism commonly used for a first analysis item group 300 and a second analysis item group 400 is a sample holder 4 positioned at a sample holding region 100, and the second mechanism commonly used for the first analysis item group 300 and the second analysis item group 400 is a reagent holder 16 positioned at a reagent holding region 200. Further, the description will be made in a case where the first analysis item group 300 indicates an item group relating to biochemistry and the second analysis item group 400 indicates an item group relating to immunity; however, needless to say, it is not limited to this combination.

The automatic analyzer 1 illustrated in Figs. 1 to 4 is a device for analyzing a sample using a reagent according to a predetermined analysis item, which is composed of an analyzer 2 and a controller 3.

The analyzer 2 illustrated in Figs. 1 to 4 includes the sample holder 4, a sample information reader 5, a sample dispensing mechanism 25, a cleaning tank 26 for sample dispensing mechanism, the reagent holder 16, a first reagent dispensing mechanism 18, a cleaning tank 19 for the first reagent dispensing mechanism, a second reagent dispensing mechanism 33, an opener 46, a cleaning tank 32 for the second reagent dispensing mechanism, a reagent stirring mechanism 34, a cleaning tank 15 for reagent stirring mechanism, a second analysis detector 14, a first incubator 35, a first stirring mechanism 30, a first analysis detector 21, a reaction vessel cleaning mechanism 22, a reaction vessel first transport mechanism 6, a second incubator 9, a second stirring mechanism 10, a reaction vessel second transport mechanism 11, and the like.

The sample holder 4 is constructed to hold sample vessels 23 for containing samples to be analyzed in the analysis relating to the first analysis item group 300 and an analysis relating to the second analysis item group 400, in an annular shape. The sample information reader 5 for reading information (various information about each sample) such as bar codes and the like attached to the sample vessels is provided around the sample holder 4. The sample information reader 5 is preferably positioned at a side end portion of a cabinet of the device.

At a time of dispensing a sample, the sample holder 4 rotates and transports the sample vessel 23 at an access position of the sample dispensing mechanism 25. The sample holder 4 is provided with a sample aspiration position 24 and just before the sample dispensing mechanism 25 aspirates a sample to be analyzed, the sample holder 4 rotates to transport the sample vessel 23 to the sample aspiration position 24.

Here, a part of the sample holder 4 may be protruded from the main frame of the automatic analyzer 1 to make the cabinet of the automatic analyzer 1 as small as possible, but preferably it should be covered with a cover.

Besides, the sample holder 4 may be physically constructed by two sample holders 4 and they can be alternately used. Sample can be added and exchanged on the way through a small window of the sample holder 4. The sample, however, does not have to be mounted by a user oneself but may be transported using a transport mechanism and the like. Alternatively, the sample holder 4 may be constructed to hold a plurality of sample racks capable of holding one or several sample vessels 23. Further, the automatic analyzer 1 may be connected to an outside sample rack transport mechanism which transports a sample rack to the sample holder 4.

The sample dispensing mechanism 25 is constructed by a rotationally driving mechanism, a vertically driving mechanism, and a dispensing probe so as to dispense a sample from the sample vessel 23 located at the sample aspiration position 24 by moving above the first incubator 35 located at the first analysis sample discharge unit 27 of the first analysis measurement unit 301 and above the disposable vessel 7 located at the second analysis sample discharge unit 28 of the second analysis measurement unit 401.

According to the rotationally driving mechanism and vertically driving mechanism of the sample dispensing mechanism 25, it moves between the sample aspiration position and the sample discharge position, dispenses the sample at the sample aspiration position 24, and discharges the aspirated sample to the first incubator 35 or the disposable vessel 7. After discharge of the sample, it is cleaned in the cleaning tank 26 for sample dispensing mechanism and moves to the next sample dispensing operation.

As illustrated in the figure, it may be configured to make access to each position according to the rotational operation, and besides it may be configured to make access to each position according to a linear operation.

The reagent holder 16 is a mechanism for holding a plurality of first reagent vessels containing reagents used for the analysis relating to the first analysis item group 300 and a plurality of second reagent vessels containing reagents used for the analysis relating to the second analysis item group 400, which includes a reagent disk (omitted as a matter for convenience of illustration), a reagent vessel holding position (a first reagent vessel mounting unit 38, a second reagent vessel mounting unit 17A, a third reagent vessel mounting unit 17B), and a cover 16A. The reagent holder 16 has a cooling function of reagents.

The reagent vessel holding positions are aligned in a double annular shape on the reagent disk, where a plurality of the first reagent vessels and the second reagent vessels can be held. The details will be described later. Further, the reagent disk has a rotationally driving mechanism and moves each of the first reagent vessels and the second reagent vessels to a predetermined position on a circumference according to the rotary motion.

In the reagent holder 16, the reagent disk is rotated before reagent dispensation, a proper reagent vessel is transported to the first reagent aspiration position 37 or the second reagent aspiration position 36, so that the first reagent dispensing mechanism 18 or the second reagent dispensing mechanism 33 can aspirate a reagent necessary for the analysis.

Here, the first reagent vessels and the second reagent vessels may be respectively formed by various reagent bottles.

The automatic analyzer 1 is provided with the first reagent dispensing mechanism 18 for discharging the reagent aspirated from the first reagent vessel to the first incubator 35 relating to the first analysis, for the purpose of the first analysis item group 300, and the second reagent dispensing mechanism 33 for discharging the reagent aspirated from the second reagent vessel to the disposable vessel 7 relating to the second analysis, for the purpose of the second analysis item group 400, separately, as a second dispensing unit for dispensing the reagent from the reagent holder 16 to the first analysis measurement unit 301 and the second analysis measurement unit 401.

Each of the first reagent dispensing mechanism 18 and the second reagent dispensing mechanism 33 has a common configuration and includes a rotationally driving mechanism, a vertically driving mechanism, and a dispensing probe. When the first reagent dispensing mechanism 18 is aspirating a reagent from the first reagent vessel, the second reagent dispensing mechanism 33 may be designed to aspirate a reagent from the second reagent vessel. According to this, the throughput of the analysis can be improved.

The first reagent dispensing mechanism 18 and the second reagent dispensing mechanism 33 rotate and move down to the positions of the respective predetermined types of the first reagent vessel and the second reagent vessel in the reagent holder 16 to aspirate each predetermined amount of the reagents. After aspirating the reagents, the first reagent dispensing mechanism 18 and the second reagent dispensing mechanism 33 move up.

Then, they rotate and move down to the reagent discharge destinations; for example, to the predetermined first incubator 35 in the case of the first reagent dispensing mechanism 18 for the biochemical analysis and to the disposable vessel 7 for the analysis of immune items arranged at the second reagent discharge position 31 in the case of the second reagent dispensing mechanism 33 for the immune analysis, and discharge the respective reagents. After discharging the reagents, they are cleaned in the cleaning tank 19 for the first reagent dispensing mechanism or the cleaning tank 32 for the second reagent dispensing mechanism, and shift to the next reagent dispensing operation.

The reagent stirring mechanism 34 (also referred to as a stirrer) is set around the reagent holder 16 to stir the reagents contained in the second reagent vessels. The reagent stirring mechanism 34 moves to the upper region of the second reagent vessel containing a magnetic particle solution to be stirred, gets down a magnetic particle stirring element of the reagent stirring mechanism 34 and rotates this stirring element, hence to stir the magnetic particle solution. The reagent stirring mechanism 34 stirs the magnetic particles just before the reagent is dispensed so as not to spontaneously precipitate the magnetic particles within the solution. After stirring, it is cleaned in the cleaning tank 15 for reagent stirring mechanism.

Hereinafter, an immune analysis flow relating to the second analysis item group 400 will be described in the order of the processing.

The reaction vessel first transport mechanism 6 has a driving mechanism in the directions of X axis, Y axis, and Z axis as well as a reaction vessel grabbing mechanism, and moves above a first tray 7a, a second tray 7b, a reaction vessel disposal position 8, the second incubator 9, and the second analysis sample discharge unit 28.

The reaction vessel second transport mechanism 11 has a rotationally driving mechanism, a vertically driving mechanism, as well as a reaction vessel grabbing mechanism, and has a function of moving the disposable vessels 7 each containing the reaction solution with a sample and a reagent mixed in the analysis relating to the second analysis item group 400 to the stirring position by the second stirring mechanism 10 provided on the rotational track and the respective reaction vessel setting positions such as the second analysis sample discharge unit 28, a reaction vessel standby position 29, a second detector preparation operation mechanism 13, and the second reagent discharge position 31 and the like.

The reaction vessel first transport mechanism 6 transports one disposable vessel 7 from the first tray 7a and the second tray 7b containing the unused disposable vessels 7 to the second analysis sample discharge unit 28.

The sample dispensing mechanism 25 dispenses a predetermined amount of a sample to the disposable vessel 7 set at the second analysis sample discharge unit 28. Thereafter, the reaction vessel second transport mechanism 11 transports the disposable vessel 7 with the sample discharged there to the second reagent discharge position 31.

The second reagent dispensing mechanism 33 dispenses a predetermined amount of R1/R2 reagent to the disposable vessel 7 set at the second reagent discharge position 31. Thereafter, the reaction vessel second transport mechanism 11 moves the disposable vessel 7 to the position of the second stirring mechanism 10 to stir the mixed solution within the disposable vessel 7.

After the reaction solution is stirred, the reaction vessel first transport mechanism 6 moves the disposable vessel 7 to the second incubator 9. Here, when dilution is necessary, the disposable vessel 7 is transported to a dilution position 28a and the diluted sample is aspirated in the next cycle.

Thereafter, the reaction vessel first transport mechanism 6 transports the disposable vessel 7 to the reaction vessel standby position 29 and at the next reagent dispensing timing, the reaction vessel second transport mechanism 11 transports the disposable vessel 7 to the second reagent discharge position 31.

Further, the second reagent dispensing mechanism 33 dispenses the Beads reagent to the disposable vessel 7 and thereafter, the reaction vessel second transport mechanism 11 transports the disposable vessel 7 to the second stirring mechanism 10 to do stirring further.

After the stirring is finished, the reaction vessel first transport mechanism 6 transports the disposable vessel 7 to the second incubator 9.

The second incubator 9 holds the disposable vessel 7 and is warmed at a proper temperature for the purpose of accelerating the reaction between the sample and the reagent, and when the reaction process between the sample and the reagent is finished in the second incubator 9, the reaction vessel first transport mechanism 6 transports the disposable vessel 7 to the reaction vessel standby position 29.

Further, when the reaction vessel second transport mechanism 11 transports the disposable vessel 7 to above the second detector preparation operation mechanism 13, a reaction solution cleaning and replacement mechanism 12 and the second detector preparation operation mechanism 13 move to perform the precleaning process.

Then, the reaction vessel second transport mechanism 11 transports the disposable vessel 7 to the second stirring mechanism 10. Then, the reaction vessel first transport mechanism 6 transports the disposable vessel 7 to the mixed solution aspiration position above the second detector preparation operation mechanism 13 and the second detector preparation operation mechanism 13 moves to the reaction solution aspiration position provided below the second analysis detector 14 to aspirate the reaction solution. Thereafter, a detector within the second analysis detector 14 aspirates the reaction solution and measures the reaction signals.

After the signal measurement, the reaction vessel second transport mechanism 11 transports the disposable vessel 7 to the reaction vessel standby position 29, and the reaction vessel first transport mechanism 6 transports the above to the reaction vessel disposal position 8 to throw out.

According to this, the automatic analyzer 1 of the embodiment includes the first analysis discharge unit 27 on which the first incubator 35 which receives the sample dispensation from the sample dispensing mechanism 25 is mounted, the second analysis sample discharge unit 28 on which the disposable vessel 7 which receives the sample dispensation from the sample dispensing mechanism 25 is mounted, the second reagent discharge position 31 on which the disposable vessel 7 for receiving the dispensation of a reagent from the second dispenser is mounted, and the reaction vessel second transport mechanism 11 which transports the disposable vessel 7 among the second analysis sample discharge unit 28, the second analysis measurement unit 401, and the second reagent discharge position 31. When the automatic analyzer 1 is viewed from the above in the vertical direction, the aspiration position of the sample dispensing mechanism 25, the first analysis sample discharge unit 27, and the second analysis sample discharge unit 28 are arranged at the overlapping position with the moving track of the dispensing probe of the sample dispensing mechanism 25.

Next, a biological analysis flow relating to the first analysis item group 300 will be described in the order of the processing.

The first incubator 35 is a mechanism for keeping the reaction solution to be analyzed by the first analysis detector 21 which measures the reaction solution in the analysis relating to the first analysis item group 300, and is warmed at a proper temperature for the purpose of accelerating the reaction between the sample and the reagent, similarly to the second incubator 9.

At first, the sample dispensing mechanism 25 dispenses a predetermined amount of a sample to the predetermined first incubator 35 containing the reaction solution with a sample and a reagent mixed in the analysis relating to the first analysis item group 300. Then, the first incubator 35 is rotated, the first incubator 35 with the sample discharged therefrom is moved to the access position of the first reagent dispensing mechanism 18, and the first reagent dispensing mechanism 18 dispenses a predetermined amount of a reagent to the first incubator 35 with the sample discharged therefrom.

Then, the first incubator 35 is rotated, the first incubator 35 with the sample and the reagent discharged therefrom is moved to the setting position of the first stirring mechanism 30, and the sample and the reagent within the first incubator 35 is stirred by the first stirring mechanism 30.

When the reaction process between the sample and the reagent is finished in the first incubator 35, the first incubator 35 is rotated and the first incubator 35 containing the reaction solution after the reaction has been finished is moved to the setting position of the first analysis detector 21 which analyzes the biochemical items of the sample.

Then, the reaction signals are measured by the detector within the first analysis detector 21. After the signals are measured, the reaction solution is discharged from the first incubator 35 by the reaction vessel cleaning mechanism 22.

Additionally, electrolytic items may be further mounted as the measurement unit 20 which can accompany the biochemical items. Here, the analysis items that can be added are not limited to the electrolytic items but any other analysis item may be added.

Of the automatic analyzer 1, the above-described mechanisms are referred to as an analysis operation unit.

In addition to the analysis operation unit, the automatic analyzer 1 further includes the controller 3 for controlling the operations of each device within the automatic analyzer 1 such as the sample holder 4 and the sample dispensing mechanism 25.

The controller 3 may be constructed by a computer including a display unit 3a such as a liquid crystal display, input unit 3b, storage, CPU, memory and the like, and it may be constructed by one single computer or another computer, with no particular limitation. Of the controller 3, at least the display unit 3a and the input unit 3b should be preferably arranged at a side of arranging the sample holder 4, particularly between the sample holder 4 and the second analyzer 400 for the sake of making easy the manual input work of the sample information. Further, it is preferable that the input unit 3b be movable to a user easily accessible position during the use, and to a position not to prevent a user to get access to each mechanism around the sample holder 4 at a time of non-use.

The control of the operations of each device according to the controller 3 is executed based on various programs recorded in the storage. The control processing of the operations executed by the controller 3 may be integrated into one program or may be separated into several programs, or it may be these combinations. A part or all of the programs may be realized by dedicated hardware or may be modularized.

The above is the configuration of the automatic analyzer 1 according to the embodiment.

This time, the layout configuration of the automatic analyzer 1 will be described.

First, the embodiment is designed to share the mechanisms that can be used in common without specializing in each item in the process from the sample input to the measurement result output.

Specifically, for the sake of simplifying the layout of the mechanisms, the mechanisms (in the embodiment, the sample holder 4, the reagent holder 16, and the sample dispensing mechanism 25) that ca be used in common in the analysis relating to the first analysis item group 300 and the analysis relating to the second analysis item group 400 are shared, and any dedicated mechanism is not provided.

Further, the characteristics of the main mechanism layout according to the operation method of each item are to be maintained and the mechanism layout is to have the same occupied area as that of the conventional products. In short, the mechanism layout maintains the characteristics of the main mechanism layout of each item to inherit the same measurement principle and operation method as the conventional products.

Of the above, the main mechanism of the first analysis item group 300 is laid out on the circumference of the first incubator 35, to continuously monitor the reaction process from the discharge of the sample and the reagent to the extraction of the measurement results and to continuously remove the liquid within the first incubator 35 after the measurement and perform the cleaning, and the other main mechanism is to be laid out on the circumference of the first incubator 35.

On the other hand, from the viewpoint of preventing contamination among the samples, the main mechanism of the second analysis item group 400 is to be laid out in the arrangement capable of handing the disposable vessel 7 in the areas for each functional use such as sample dispensation, reagent dispensation, reagent reaction, reaction liquid measurement and the like, because of the inspection method of throwing the disposable vessels 7 in the respective inspection items.

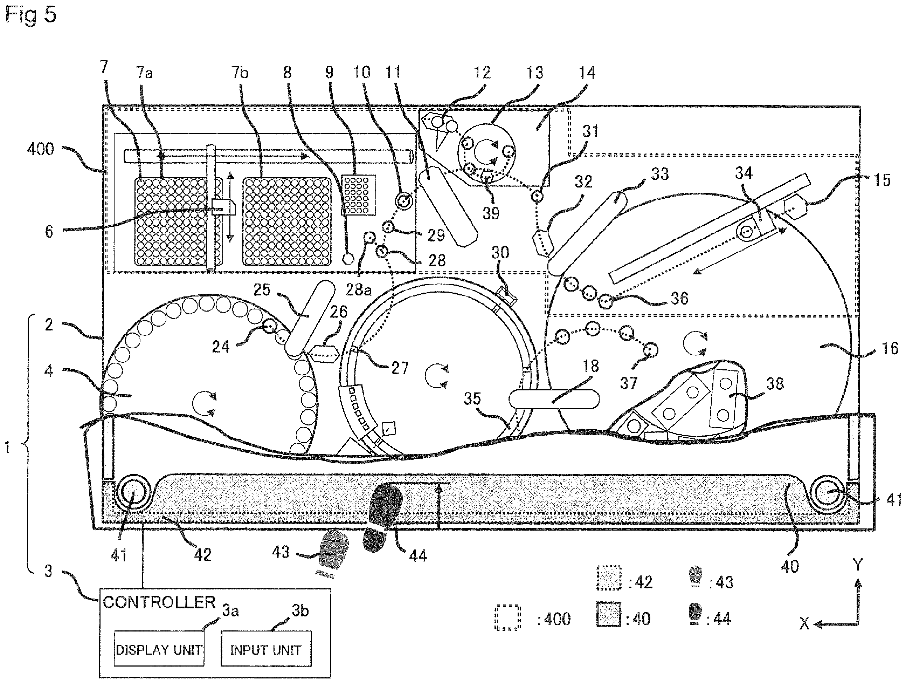

To satisfy these requirements, when a left-right direction of an assumed standing position of a user (Figs. 1 to 3, and the bottom side in Fig. 5) is defined as an X axis and the orthogonal direction to the X axis is defined as a Y axis, the sample holder 4, the first analysis measurement unit 301, and the reagent holder 16 are arranged in this order from the left (in the plus direction in the X direction in Figs. 1 to 3 and Fig. 5) to the right (in the minus direction in the X direction in Figs. 1 to 3 and Fig. 5) of the standing position, along the X axis. In short, the area of loading and storing a sample in the automatic analyzer 1 and the area of loading and storing a reagent are arranged respectively at the left and the right sides on the front surface of the device to make access easy.

At the same time, the first analysis measurement unit 301 and the second analysis measurement unit 401 are arranged in this order in the direction away from the standing position (upper side of Figs. 1 to 3 and Fig. 5) along the Y axis.

Here, the first analysis measurement unit 301 is designed to continuously perform the reaction process and various processing in the first incubator 35, and therefore it includes a comparatively lower units; while the second analysis measurement unit 401 is designed to transfer the disposable vessel 7, and therefore it includes a lot of units which are higher on the whole. Therefore, from the viewpoint of usability, the first analysis measurement unit 301 is laid out on the front side in the middle of the automatic analyzer 1 and the second analysis measurement unit 401 is laid out on the rear side, to secure the accessibility and visibility.

Further, the second analysis measurement unit 401 is arranged at a higher position than the first analysis measurement unit 301 in the vertical direction. More specifically, the first analysis measurement unit 301 is arranged at the same height as the device table surface, while the second analysis measurement unit 401 is arranged at a higher position than the table surface in the vertical direction.

A touch panel 3c serving both the display unit 3a and the input unit 3b of the controller 3 is arranged between the sample holder 4 and the second analyzing unit 400.

Fig. 5 is a diagram illustrating a schematic configuration of a lower structure of the automatic analyzer.

The second analysis measurement unit 401, the first tray 7a, and the second tray 7b and the like cannot be arranged at the front side of the device for the reason mentioned above. Then, to make it easy to gain access to the mechanism existing on the rear side from the front surface of the automatic analyzer 1 during the user's daily inspection and maintenance, a space where a user can insert his or her tiptoe is provided below at least one of the sample holder 4, the first analysis measurement unit 301, and the reagent holder 16 in the vertical direction and on the surface in contact with the floor at the standing position.

As a structure which allows the foot toe portion to step into the occupied area (foot print) where the device is installed, a device holding caster portions 41 are provided on the ends of the cabinet of the automatic analyzer 1 and a skirt structure 40 is provided in the lower portion on the front surface of the automatic analyzer 1. According to this, the device standing position 44 in the .automatic analyzer 1 of the present invention can be positioned inside the device, compared with the standing position 43 of the conventional device in the conventional skirt structure 42.

Since the first analysis item group 300 and the second analysis item group 400 are different analysis item, it is preferable that the shape of the first reagent vessel containing the first reagent for the first analysis item group 300 should be different from the shape of the second reagent vessel containing the second reagent for the second analysis item group 400. In this case, the reagent holder 16 is preferably provided with a position dedicated for holding each reagent vessel.

Specifically, as the reagent holding position, the reagent holder 16 has a first reagent vessel mounting unit 38 capable of holding only the first reagent vessel containing the first reagent among the reagents as the second liquid, a second reagent vessel mounting unit 17A capable of holding only the second reagent vessel containing the second reagent of a type different from the first reagent, and a third reagent vessel mounting unit 17B capable of holding both the first reagent vessel and the second reagent vessel.

The respective positions of the first reagent vessel mounting unit 38, the second reagent vessel mounting unit 17A, and the third reagent vessel mounting unit 17B are arranged in a double annular form so that only the first reagent vessel mounting units 18 are located on the inner circumference side and that the second reagent vessel mounting units 17A and the third reagent vessel mounting units 17B are located alternately on the outer circumference side.

Further, the first reagent vessel mounting units 38 on the inner circumference side and the third reagent vessel mounting units 17B on the outer circumference side are positioned so that their longitudinal direction is not in parallel to a line extending radially from the center of the reagent holder 16, to make easy the access by the first reagent dispensing mechanism 18.

On the other hand, the second reagent vessel mounting units 17A are positioned so that their longitudinal direction is not in parallel to the longitudinal direction of the first reagent vessel mounting units 38 and the third reagent vessel mounting units 17B.

Here, it is desirable that the operating areas of the first reagent dispensing mechanism 18 and the second reagent dispensing mechanism 33 should not interfere with each other to avoid reduction in analysis throughput while reducing the setting area of the cabinet of the automatic analyzer 1. It is also desirable that the distance between the aspiration position of the reagent and the discharge position of the reagent (the distance between the first reagent aspiration position 37 and the reagent discharge position of the first incubator 35 and the distance between the second reagent aspiration position 36 and the second reagent discharge position 31) should be close.

To make the structure of the reagent holder 16 compatible with the arrangement relationship of the first reagent dispensing mechanism 18 and the second reagent dispensing mechanism 33 as mentioned above, the first reagent dispensing mechanism 18 is arranged with the rotational shaft 18A of its arm on the cover 16A of the reagent holder 16 as illustrated in Fig. 4, in the automatic analyzer 1.

The first reagent vessel and the second reagent vessel are provided with plugs for preventing deterioration of the reagents. Alternatively, the second reagent vessel containing the second liquid for the second analysis item group 400 may be provided with a cap instead of the plug.

Since it is a burden for a user to open these taps or caps, the automatic analyzer 1 is provided with a needle for automatically open the reagent vessels loaded into the device, in the cleaning tank 19 for the first reagent dispensing mechanism, in a form removable from the first reagent dispensing mechanism 18. Similarly, the opener 46 is provided near the second reagent aspiration position 36 as a mechanism of removing the caps.

The needle is desired not to be positioned between the first reagent aspiration position 37 and the reagent discharge position of the first incubator 35 to avoid the reagent from dropping down to the needle. Accordingly, the cleaning tank 19 for the first reagent dispensing mechanism is arranged not between the first reagent aspiration position 37 and the reagent discharge position of the first incubator 35 but around the first incubator 35 on the extending line of the operation track, of the whole extending line of the operation track between the first reagent aspiration position 37 of the first reagent dispensing mechanism 18 and the reagent discharge position of the first incubator 35, and after the loading of the reagent vessel is recognized, the first reagent dispensing mechanism 18 grabs the needle, opens the plug, and cleans the needle at a timing not overlapping with the timing of aspirating the reagent.

Further, it is preferable that the second liquid for the second analysis item group 400 should be stirred at a timing just before the use. Although the reagent stirring mechanism 34 is provided for this purpose, it is preferable that, to make the operation distance of the reagent stirring mechanism 34 as short as possible, the above should be placed at the position not overlapping with the operation area of the second reagent dispensing mechanism 33 and should be designed to extend to the second reagent aspiration position 36 that is the stirring position at the shortest distance from the outer circumference of the reagent holder 16. In this case, however, the access to the reagent stirring mechanism 34 is difficult to be accessed from the front side of the automatic analyzer 1, and therefore, the maintenance is assumed to be time consuming.

Then, as illustrated in Fig. 1 and the like, the above is provided at the outer circumference side opposite to the side of the second reagent aspiration position 36 of the reagent holder 16 so that it may be positioned at the front side of the automatic analyzer 1 and that its operation track may crosse most of the reagent holder 16.

In this case, it takes time for the operation; however, since the operation track of the reagent stirring mechanism 34 does not overlap with the operation area of the second reagent dispensing mechanism 33, when stirring is necessary, the above problem can be handled by moving the mechanism 34 to near the second reagent aspiration position 36 and keeping it waiting at a timing till the stirring cycle, and therefore, a problem rarely occurs on the time chart.

In the automatic analyzer 1 of the embodiment, the sample dispensing mechanism 25 is shared between the first analysis item group 300 and the second analysis item group 400, and therefore, it is not necessary to pass over the first incubator 35 in addition to the first analysis sample discharge unit 27, during the transfer to the second analysis sample discharge unit 28 after a sample is aspirated. At this time, to avoid the sample from dropping down to the first incubator 35, it is preferable that a cover should be provided at least above the space between the first analysis sample discharge unit 27 and the second analysis sample discharge unit 28, of the area where the track of the sample dispensing mechanism 25 overlaps with the first incubator 35.

Here, the access to the second analysis sample discharge unit 28 can be designed not to pass over the first incubator 35, which makes the operation distance longer; further although it is necessary to pass over the first tray 7a and the second tray 7b, the same cover is provided over the first tray 7a and the second tray 7b; accordingly, it is preferable that the track of moving to the second analysis sample discharge unit 28 should pass over the first incubator 35

Next, the effects of the embodiment will be described.

In the automatic analyzer 1 in the above-mentioned embodiment, when it is provided with the sample dispensing mechanism 25 of dispensing the first liquid from the first mechanism to the first analysis measurement unit 301 and the second analysis measurement unit 401 and the second dispenser of dispensing the second liquid different from the first liquid from the second mechanism to the first analysis measurement unit 301 and the second analysis measurement unit 401, or when it is provided with the first analysis measurement unit 301 of performing analysis relating to the biochemical item group and the second analysis measurement unit 401 of performing analysis relating to the immune item group, with the left-right direction of the assumed standing position of a user defined as the X axis and the direction orthogonal to the X axis defined as the Y axis, the first mechanism, the first analysis measurement unit 301, and the second mechanism are arranged in this order from the left of the standing position along the x axis and the first analysis measurement unit 301 and the second analysis measurement unit 401 are arranged in this order in the direction away from the standing position along the Y axis.

According to this, it is possible to properly arrange or simplify the function layout according to each item while inheriting the operation feeling of the conventional devices, in the automatic analyzer capable of performing analysis on the two analysis items of different operation methods and measurement principles, which has the function layout and the system configuration specialized for each operation. Further, the setting area of the automatic analyzer 1 can be suppressed from becoming larger than necessary.

Further, since the sample is used for measuring each item as a main subject to be measured, the sample dispensing mechanism 25 is designed to dispense the sample to the first analysis measurement unit 301 and the second analysis measurement unit 401; therefore, one sample dispensation is surely performed with one sample aspiration for one analysis item, which can avoid mix-up of sample or dispensation error. Furthermore, it is not necessary to install a plurality of sample dispensing mechanisms, which contributes space saving.

Additionally, although the reagent holder 16 is configured to keep each reagent in common for biochemistry and immunity, the reagent vessels are basically different depending on the respective items, and to inherit the same dispensation operation as the conventional products, the second dispenser includes the first reagent dispensing mechanism 18 configured to dispense the reagent for the first analysis item group 300 in the first analysis measurement unit 301 and the second reagent dispensing mechanism 33 configured to dispense the reagent for the second analysis item group 400 in the second analysis measurement unit 401; therefore, in the second analyzing unit which provides dispensing access to each analyzing unit, a dedicated dispensing probe is paired with each analyzing unit, which can avoid dispensation error of the reagent and reduction of the analysis throughput.

Further, the second analysis measurement unit 401 is set at a higher position than the first analysis measurement unit 301 in the vertical direction, which can make the access easy while keeping the configuration depending on each measurement principle and by suppressing the first analysis measurement unit 301 from being a disturbance at a time of access to the second analysis measurement unit 401 provided on the rear side of the automatic analyzer 1.

Additionally, a space where a user's tiptoe can be inserted is provided at least below one of the first mechanism, the first analysis measurement unit 301, and the second mechanism in the vertical direction and on the surface in contact with the floor at the standing position, which makes it easy to get access to the rear side of the automatic analyzer 1.

Furthermore, the automatic analyzer 1 includes the first analysis sample discharge unit 27 where the first incubator 35 that receives the sample dispensation from the sample dispensing mechanism 25 is mounted, the second analysis sample discharge unit 28 where the disposable vessel 7 that receives the sample dispensation from the sample dispensing mechanism 25 is mounted, the second reagent discharge position 31 where the disposable vessel 7 is mounted for receiving the reagent dispensation from the second dispenser, and the reaction vessel second transport mechanism 11 that transports the disposable vessel 7 between the second analysis sample discharge unit 28, the second analysis measurement unit 401, and the second reagent discharge position 31, and when the automatic analyzer 1 is viewed from the above in the vertical direction, the aspiration position of the sample dispensing mechanism 25, the first analysis sample discharge unit 27, and the second analysis sample discharge unit 28 are arranged at the position overlapping with the moving track of the dispensing probe of the sample dispensing mechanism 25, which makes it efficient to handle the disposable vessel 7 in the second analysis measurement unit 401.

Further, the first reagent vessel mounting units 38 and the third reagent vessel mounting units 17B are located so as not to be parallel to a line extending radially from the center of the reagent holder 16 to make access by the first reagent dispensing mechanism 18 easy, and therefore, a user can freely set the distribution of various types of reagent vessels to be contained in the third reagent vessel mounting units 17B, which contributes a flexibility in the limited number of the containers and improves the usability. Furthermore, it has such an effect that the unbalanced weight when the first reagent vessels and the second reagent vessels are all mounted can be reduced and that the center axis at the centrifugal operation can be close to the rotation center of the reagent disk. Moreover, it is possible to easily achieve both the dispensation of the first reagent from each first reagent vessel that is mounted in the first reagent vessel mounting unit 38 and the third reagent vessel mounting unit 17B by the first reagent dispending mechanism 18 and the dispensation of the second reagent from each second reagent vessel that is mounted in the second reagent vessel mounting unit 17A by the second reagent dispensing mechanism 33.

Furthermore, in the first reagent dispensing mechanism 18, the rotational shaft 18A of the arm is arranged above the cover 16A of the reagent holder 16, which can reduce the installation area of the device while dispensing the first reagent from each first reagent vessel that is mounted in the first reagent vessel mounting unit 38 and the third reagent vessel mounting unit 17B.

### Others

Here, the present invention is not limited to the above-mentioned embodiments and various modifications and applications are to be made. The above-described embodiments have been described in detail in order to facilitate the understanding of the present invention, and the present invention is not necessarily limited to those including all of the described configurations.

### List of Reference Signs

1: Automatic analyzer
2: Analyzing unit
3: Controller
3a: Display unit
3b: Input unit
3c: Touch panel
4: Sample holder (first mechanism)
5: Sample information reader
6: Reaction vessel first transport mechanism
7: Disposable vessel (second reaction vessel)
7a: First tray
7b: Second tray
8: Reaction vessel disposal position
9: Second incubator
10: Second stirring mechanism
11: Reaction vessel second transport mechanism (transport unit)
12: Reaction solution cleaning and replacement mechanism
13: Second detector preparation operation mechanism
14: Second analysis detector
15: Cleaning tank for reagent stirring mechanism
16: Reagent holder (second mechanism)
16A: Cover
17A: Second reagent vessel mounting unit (second mounting unit)
17B: Third reagent vessel mounting unit (third mounting unit)
18: First reagent dispensing mechanism (second dispenser, first arm)
18A: Rotational shaft
19: Cleaning tank for first reagent dispensing mechanism
20: Measurement unit that can be attached for first analysis item
21: First analysis detector
22: Reaction vessel cleaning mechanism
23: Sample vessel
24: Sample aspiration position
25: Sample dispensing mechanism (first dispenser)
26: Cleaning tank for sample dispensing mechanism
27: First analysis sample discharge unit (first mounting space)
28: Second analysis sample discharge unit (second mounting space)
28a: Dilution position
29: Reaction vessel standby position
30: First stirring mechanism
31: Second reagent discharge position (third mounting space)
32: Cleaning tank for second reagent dispensing mechanism
33: Second reagent dispensing mechanism (second dispenser, second arm)
34: Reagent stirring mechanism
35: First incubator (first reaction vessel)
36: Second reagent aspiration position
37: First reagent aspiration position
38: First reagent vessel mounting unit (first mounting unit)
39: Detector aspiration nozzle cleaning tank
40: Skirt structure
41: Device holding caster portion
42: Conventional skirt structure
43: Standing position for conventional device
44: Standing position for device
46: Opener
100: Sample holding region
200: Reagent holding region
300: First analysis item group (biochemical item group)
301: First analysis measurement unit (first analyzer)
400: Second analysis item group (immune item group)
401: Second analysis measurement unit (second analyzer)

## Claims

1. An automatic analyzer comprising:
a first analyzer configured to perform analysis relating to a first analysis item group;
a second analyzer configured to perform analysis relating to a second analysis item group different from the first analysis item group;
a first mechanism commonly used for the first analysis item group and the second analysis item group;
a second mechanism different from the first mechanism and commonly used for the first analysis item group and the second analysis item group;
a first dispenser configured to dispense a first liquid from the first mechanism to the first analyzer and the second analyzer; and
a second dispenser configured to dispense a second liquid different from the first liquid from the second mechanism to the first analyzer and the second analyzer, wherein
when a left-right direction of an assumed standing position of a user is defined as an X axis, and a direction orthogonal to the X axis is defined as a Y axis, the first mechanism, the first analyzer, and the second mechanism are arranged in this order from a left side of the standing position along the X axis, and the first analyzer and the second analyzer are arranged in this order in a direction away from the standing position along the Y axis.

2. An automatic analyzer comprising:
a first analyzer configured to perform analysis relating to a biochemical item group;
a second analyzer configured to perform analysis relating to an immune item group;
a first mechanism commonly used for the biochemical item group and the immune item group; and
a second mechanism different from the first mechanism and commonly used for the biochemical item group and the immune item group, wherein
when a left-right direction of an assumed standing position of a user is defined as an X axis, and a direction orthogonal to the X axis is defined as a Y axis, the first mechanism, the first analyzer, and the second mechanism are arranged in this order from a left side of the standing position along the X axis, and the first analyzer and the second analyzer are arranged in this order in a direction away from the standing position along the Y axis.

3. The automatic analyzer according to claim 1, wherein
the first dispenser is configured to dispense the first liquid to the first analyzer and the second analyzer.

4. The automatic analyzer according to claim 1, wherein
the second dispenser includes a first arm configured to dispense the second liquid for the first analysis item group to the first analyzer, and a second arm configured to dispense the second liquid for the second analysis item group to the second analyzer.

5. The automatic analyzer according to claim 1 or 2, wherein the second analyzer is installed so as to be higher than the first analyzer in a vertical direction.

6. The automatic analyzer according to claim 1 or 2, wherein
the first mechanism is a sample holder, and
the second mechanism is a reagent holder.

7. The automatic analyzer according to claim 1, wherein
the first analysis item group indicates an item group relating to biochemistry, and
the second analysis item group indicates an item group relating to immunity.

8. The automatic analyzer according to claim 1 or 2, wherein
a space into which a tiptoe of the user can be inserted is present below at least one of the first mechanism, the first analyzer, and the second mechanism in a vertical direction and above a surface in contact with a floor at the standing position.

9. The first automatic analyzer according to claim 1, further comprising:
a first mounting space where a first reaction vessel that receives the first liquid dispensed from the first dispenser is mounted;
a second mounting space where a second reaction vessel that receives the first liquid dispensed from the first dispenser is mounted;
a third mounting space where the second reaction vessel that receives the second liquid dispensed from the second dispenser is mounted; and
a transport unit that transports the second reaction vessel between the second mounting space, the second analyzer, and the third mounting space, wherein
when the automatic analyzer is viewed from above in a vertical direction, an aspiration position of the first dispenser, the first mounting space, and the second mounting space are located at positions overlapping a movement trajectory of a dispensing probe of the first dispenser.

10. The automatic analyzer according to claim 4, wherein
the second mechanism is a reagent holder,
the reagent holder includes
a first mounting unit capable of holding only a first reagent vessel for storing a first reagent among reagents as the second liquid,
a second mounting unit capable of holding only a second reagent vessel for storing a second reagent of a type different from the first reagent, and
a third mounting unit capable of holding both the first reagent vessel and the second reagent vessel,
the first mounting unit, the second mounting unit, and the third mounting unit are arranged in a double annular form such that only the first mounting unit is located on an inner circumference side and the second mounting unit and and the third mounting unit are alternately located on an outer circumference side, and
the first mounting unit and the third mounting unit are located so as not to be parallel to a line extending radially from the center of the reagent holder such that the first arm can be easily accessed.

11. The automatic analyzer according to claim 10, wherein
a rotational shaft of the first arm is arranged above a cover of the reagent holder.

12. The automatic analyzer according to claim 1 or 2, comprising:
a controller configured to control an operation of the automatic analyzer;
a display unit configured to display information output by the controller; and
an input unit configured to accept an input from a user, wherein
the first mechanism is a sample holder, and
the display unit and the input input are arranged between the sample holder and the second analyzing unit.
